# EUROPÄISCHE PATENTSCHRIFT

(11) **EP 1 122 471 B1**
(45) Veröffentlichungstag und Bekanntmachung des Hinweises auf die Patenterteilung: **30.03.2005**
(21) Anmeldenummer: 00127782.1
(22) Anmeldetag: 19.12.2000
(51) Int. Cl.: F16J 15/32

(54) **Dichtanordnung zwischen zwei relativ zueinander drehenden Bauteilen**
Sealing arrangement for two relatively rotating elements
Agencement d'étanchéité entre deux éléments en rotation l'un par rapport à l'autre

(30) Priorität: 08.01.2000 DE 10000541
(43) Veröffentlichungstag der Anmeldung: 08.08.2001
(73) Patentinhaber: Voith Paper Patent GmbH, 89522 Heidenheim (DE); Saint-Gobain PPL Kontich N.V., 2550 Kontich (BE)
(72) Erfinder: Lebeau, Francis, 2660 Westerlo (BE); Wenzel, Reinhard, 47809 Krefeld (DE)
(74) Vertreter: Knoblauch, Andreas, Dr.-Ing.

(56) Entgegenhaltungen:
- DE-C- 854 448
- DE-C- 858 371
- DE-C- 953 029
- US-A- 2 186 537

## Beschreibung

Die Erfindung bezieht sich auf eine Dichtanordnung für den Einsatz zwischen zwei relativ zueinander drehenden Bauteilen, von denen das erste am Innen- oder Außenumfang eine zylindrische Umfangsfläche und das zweite eine zur Umfangsfläche hin offene Ringnut aufweist, enthaltend das zweite Bauteil mit der Ringnut, und einem in der Ringnut verlagerbaren, ringförmiger Träger, der mittels eines zentrierstegs auf der Umfangsfläche führbar ist und der eine Radiallippendichtung, deren Lippe federnd an der Umfangsfläche anlegbar ist, und eine Axialdichtung, die an einer ersten Ringnut-Seitenwand anliegt, trägt, ferner mit einer Verdrehsicherung für den Träger, die für den Träger ein begrenztes Bewegungsspiel in allen Richtungen der Radialebene zuläßt, mit Anschlägen, die seitlich aus dem Träger vorstehen, und mit einer zweiten Ringnut-Seitenwand, in der Vertiefungen mit größerer Querschnittsfläche als die Anschläge vorgesehen sind, in die die Anschläge ragen.

Eine derartige Dichtanordnung ist aus der DE 953 029 C bekannt. Bei dieser Dichtanordnung sind in einer ersten Ausführungsform die Anschläge als Nocken aus einer der zweiten Ringnut-Seitenwand zugekehrten Rückenfläche der Radiallippendichtung geformt, und der aus Metall bestehende Träger ist in der aus gummielastischem Material bestehenden Radiallippendichtung eingebettet. Da die Nocken bei einer relativen Verdrehung der beiden Bauteile auf Scherung beansprucht werden, besteht die Gefahr, daß die Nocken beschädigt oder sogar abgeschert werden. Das Einbetten des Trägers in der Radiallippendichtung erschwert deren Herstellung, insbesondere da sie ringförmig ist.

Bei einer zweiten Ausführungsform dieser bekannten Dichtanordnung übergreift der Träger die Radiallippendichtung auf einer radial äußeren Umfangsfläche und einer radialen Rückenfläche. Der Träger ist selbst mit axial herausgedrückten, in die Vertiefungen der zweiten Ringnut-Seitenwand eingreifenden Nocken versehen, in die Nocken der Radiallippendichtung axial von innen her eingreifen. Auch hierbei werden die Nocken der Radiallippendichtung auf Scherung beansprucht, und die Radiallippendichtung muß zusätzlich am Träger angeklebt oder anvulkanisiert sein, um die auf die Nocken der Radiallippendichtung einwirkenden Scherkräfte möglichst gering zu halten. Das Ankleben von gummielastischem Material an Metall erfordert Spezialklebstoffe, und das Anvulkanisieren ist nicht hinreichend zuverlässig haltbar.

Dagegen erlaubt es die Verdrehsicherung in beiden Fällen, die Radialdichtlippen mit größerer Kraft an die Umfangsfläche zu drücken, sei es durch den Öldruck, der auf die Dichtungsanordnung einwirkt, oder durch konstruktive Maßnahmen, ohne daß die Gefahr besteht, daß der ringförmige Träger und die Ringnut relativ zueinander rotieren. Trotzdem ist die freie Beweglichkeit zwischen Träger und Ringnut, wie sie zur Aufrechterhaltung der Dichtwirkung bei sich gegeneinander verlagernden Bauteilen erforderlich ist, gewährleistet.

Aus der DE 198 09 303 A1 ist eine Dichtanordnung zwischen zwei relativ zueinander drehenden Bauteilen bekannt, von denen das erste am Innen- oder Außenumfang eine zylindrische Umfangsfläche und das zweite eine zur Umfangsfläche hin offene Ringnut aufweist, wobei in der Ringnut ein ringförmiger Träger verlagerbar ist, der mittels eines Zentrierstegs auf der Umfangsfläche geführt ist sowie eine Radiallippendichtung, deren Lippe federnd an der Umfangsfläche anliegt, und eine Axialdichtung, die an einer Ringnut-Seitenwand anliegt, trägt.

Bei dieser Dichtanordnung ist infolge der Verlagerbarkeit des Trägers in der Ringnut und der Federwirkung der Radiallippe eine Abdichtung auch dann noch gewährleistet, wenn die Achsen der beiden Bauteile radial gegeneinander versetzt sind oder windschief zueinander verlaufen.

Der Erfindung liegt die Aufgabe zugrunde, eine Dichtanordnung der eingangs beschriebenen Art zu verbessern, insbesondere weiterhin die Abdichtung gegen höhere Öldrücke sicherzustellen.

Diese Aufgabe ist erfindungsgemäß dadurch gelöst, daß die Anschläge Köpfe von Schrauben sind, die axial in den Träger eingeschraubt sind.

Bei dieser Lösung lassen sich die Schrauben bei der Montage leicht einführen. Sie können auch dazu dienen, weitere Bauelemente mit dem Träger zu verbinden.

So ist es günstig, daß die Schrauben die Radiallippendichtung am Träger festhalten. Eine Relativbewegung zwischen Träger und Radiallippendichtung ist daher ausgeschlossen.

Stattdessen oder zusätzlich kann mit Vorteil dafür gesorgt sein, daß die Schrauben eine die Radiallippendichtung abstützende Stützringscheibe am Träger festhalten. Eine solche Stützringscheibe verhindert das Herausdrücken der Radiallippendichtung bei höheren abzudichtenden Drücken.

Vorzugsweise haben die Anschläge Kreisform und ragen in kreisförmige Vertiefungen. Dies führt zu einem gleichmäßigen Bewegungsspiel in allen Richtungen der Radialebene. Bei Anlage des Anschlags an der Seitenwand der Vertiefung ergibt sich eine Linienberührung, die ein Verhaken o.dgl. ausschließt.

Die Größe der Durchmesser richtet sich nach dem jeweiligen Anwendungszweck und der Größe des abzudichtenden Durchmessers. Als zweckmäßig hat es sich hierbei erwiesen, daß der Durchmesser der Vertiefungen etwa das 2,5-bis 3-fache des Durchmessers der Anschläge beträgt.

In weiterer Ausgestaltung der Erfindung ist dafür gesorgt, daß die eine Ringnut-Seitenwand durch eine die Vertiefungen als Löcher aufweisende Verdrehsicherungsringscheibe gebildet wird, die am Ringnutengrund zentriert und durch Axialschrauben und eine Abdeckringscheibe am zweiten Bauteil befestigt ist. Dies führt zu einer sehr einfachen Herstellung der Vertiefungen. Auch die Montage ist komplikationslos. Des weiteren ist es günstig, daß die Radiallippe der Radiallippendichtung durch eine Feder in Richtung auf die Umfangsfläche belastet ist. Auf diese Weise kann die Anpreßkraft der Radiallippe erhöht werden, was in vielen Fällen wünschenswert und wegen der beanspruchten Verdrehsicherung auch zulässig ist.

Vorzugsweise ist die Feder eine ringförmige, im Querschnitt U-förmige Blattfeder. Diese kann sich gut an die Radiallippe anpassen.

Besonders bevorzugt ist es, daß das eine Bauteil die drehfest gehaltene Achse und das andere Bauteil den darauf hydraulisch abgestützten Mantel einer Durchbiegungseinstellwalze umfaßt. Der Mantelinnenraum solcher Durchbiegungseinstellwalzen enthält Öl und muß über einen verhältnismäßig großen Durchmesser abgedichtet werden. Außerdem biegt sich die Achse, je nach Anwendungszweck, in vertikaler und/oder horizontaler Richtung durch. Trotzdem bleibt die Abdichtung in vollem Umfang erhalten.

Die Erfindung wird im folgenden anhand eines bevorzugten Ausführungsbeispiels in Verbindung mit der Zeichnung näher beschrieben. Hierin zeigen:
- Fig. 1: einen Teilquerschnitt durch eine erfindungsgemäße Dichtungsanordnung und
- Fig. 2: eine Stirnansicht einer Verdrehsicherungsringscheibe.

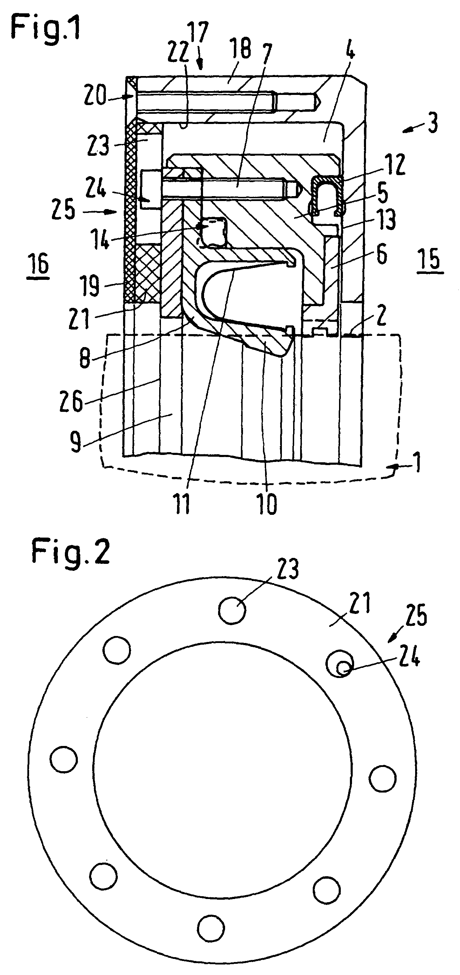

In Fig. 1 ist gestrichelt ein erstes Bauteil 1 mit einer zylindrischen Umfangsfläche 2 veranschaulicht. Ein zweites Bauteil 3 weist eine Ringnut 4 auf, in der ein Träger 5 verlagerbar ist. Dieser hat ein begrenztes axiales Spiel in der Ringnut 4 und stützt sich über einen Zentriersteg 6 auf der Umfangsfläche 2 ab. Mit Hilfe einer Anzahl von Schrauben 7 ist am Träger 5 eine Radiallippendichtung 8 und eine Stützringscheibe 9 befestigt. Die Stützringscheibe 9 verhindert eine Verformung der Radiallippendichtung 8 unter dem Einfluß des abzudichtenden Fluids. Daher wird die Radiallippendichtung 8 gegen Verschleiß geschützt. Diese Radiallippendichtung 8 besteht beispielsweise aus PTFE und besitzt eine Radiallippe 10, die im Einbauzustand radial nach außen gedrückt ist und unter dem Einfluß der Eigenelastizität'und der Kraft einer gebogenen Blattfeder 11 an der Umfangsfläche 2 anliegt. In der Seitenwand des Trägers 5 ist eine Axialdichtung 12 angeordnet, die an der Seitenwand 13 der Ringnut 4 anliegt. Des weiteren gibt es noch eine statische Dichtung 14, welche die Trennfuge zwischen Träger 5 und Radiallippendichtung 8 sperrt. Auf diese Weise erhält man eine Abdichtung zwischen dem Raum 15 (in der Zeichnung rechts von der Dichtungsanordnung) und dem Raum 16 (in der Zeichnung links von der Dichtungsanordnung).

Die Ringnut 4 befindet sich in einem mehrteiligen Gehäuse 17, das als Element des zweiten Bauteils 3 in den Rest dieses Bauteils eingebaut wird. Ein im Querschnitt L-förmiger Hüllkörper 18 ist stirnseitig mit einer Abdeckringscheibe 19 versehen, die mit Hilfe einer Anzahl von Schrauben 20 am Hüllkörper 18 befestigt ist. Zwischen Abdeckringscheibe 19 und Stützringscheibe 9 befindet sich eine Verdrehsicherungsringscheibe 21, die mit ihrem Umfang am Nutengrund 22 der Ringnut 4 geführt und durch Kleben o.dgl. mit der Abdeckringscheibe 19 verbunden und daher gegen Verdrehen gesichert ist. In der Verdrehsicherungsringscheibe 21 befinden sich als kreisrunde Löcher ausgebildete Vertiefungen 23, die zusammen mit einem kreisrunden Anschlag 24, hier in der Form des Kopfes der Schraube 7, eine Verdrehsicherung 25 bilden, die in allen Richtungen der Radialebene ein begrenztes Bewegungsspiel zuläßt. Die in der Figur rechte Stirnseite der Verdrehsicherungsringscheibe 21 bildet hierbei die andere Seitenwand 26 der Ringnut 4. In Fig. 2 sind acht Vertiefungen 23 und Anschläge 24 vorgesehen. In Abhängigkeit von der Größe der Dichtungsanordnung kommen aber auch andere Zahlen in Betracht.

In Fig. 2 ist lediglich eine Vertiefung 23 gezeigt, die eine gewisse Bewegung des darin befindlichen Anschlags 24 in allen Richtungen der Radialebene zuläßt und nach einem gewissen Bewegungsspiel begrenzt. Die gleichen Anschläge befinden sich auch in den anderen Vertiefungen 23.

Wenn das Bauteil 1 die drehfest gehaltene Achse einer Durchbiegungseinstellwalze ist und das Bauteil 3 den rotierenden Walzenmantel und dessen den Innenraum abschließende Stirnwände umfaßt, können im Betrieb recht erhebliche Durchbiegungen der Achse auftreten mit der Folge, daß die Mittellinien der beiden Bauteile nicht mehr übereinstimmen. Da der Träger 5 mit den daran befestigten Teilen ein gewisses axiales Spiel in der Ringnut 4 hat, kann der Träger 5 im Rahmen des durch die Verdrehsicherung 25 zugelassenen Bewegungsspiels eine Kippbewegung vollziehen, die die Radialdichtlippe 10 ziemlich unverändert an der Umfangsfläche 2 beläßt. Es ist hierbei gleichgültig, in welcher Richtung die Durchbiegung der Achse erfolgt, weil die Verdrehsicherung 25 ein Kippen in jeder Richtung zuläßt.

Vorstehend wurde angenommen, daß das Bauteil 1 drehfest und das Bauteil 3 rotierend ist. Es kann aber auch das Bauteil 1 drehen und das Bauteil 3 maschinenfest ausgebildet sein. Sodann können beide Bauteile 1 und 2, aber mit unterschiedlicher Geschwindigkeit oder Drehrichtung drehen. Das Ausführungsbeispiel zeigt eine Radialdichtlippe 10, die radial nach innen wirkt. Es ist aber auch möglich, die Anordnung so zutreffen, daß die Umfangsfläche 2 an einem Innenumfang ausgebildet ist und die Radialdichtlippe 10 radial nach außen wirkt. Als Material für die Radialdichtlippe 10 kommt nicht nur PTFE in Betracht, sondern auch Gummi oder ein anderer elastischer Werkstoff.

Die Axialdichtung 12 ist vorzugsweise - wie in der Zeichnung dargestellt - eine Axiallippendichtung, deren Lippe federnd an der Ringnut-Seitenwand anliegt, kann aber in vielen Fällen auch anders gestaltet sein, z.B. als O-Ring-Dichtung.

## Patentansprüche

1. Dichtanordnung für den Einsatz zwischen zwei relativ zueinander drehenden Bauteilen (1, 3), von denen das erste (1) am Innen- oder Außenumfang eine zylindrische Umfangsfläche (2) und das zweite eine zur Umfangsfläche (2) hin offene Ringnut (4) aufweist, enthaltend das zweite Bauteil (3) mit der Ringnut (4), und einem in der Ringnut verlagerbaren, ringförmiger Träger (5), der mittels eines Zentrierstegs (6) auf der Umfangsfläche führbar ist und der eine Radiallippendichtung (8), deren Lippe (10) federnd an der Umfangsfläche (2) anlegbar ist, und eine Axialdichtung (12), die an einer ersten Ringnut-Seitenwand (13) anliegt, trägt, ferner mit einer Verdrehsicherung (25) für den Träger (5), die für den Träger (5) ein begrenztes Bewegungsspiel in allen Richtungen der Radialebene zuläßt, mit Anschlägen (24), die seitlich aus dem Träger (5) vorstehen, und mit einer zweiten Ringnut-Seitenwand (19, 21), in der Vertiefungen (23) mit größerer Querschnittsfläche als die Anschläge (24) vorgesehen sind, in die die Anschläge ragen, **dadurch gekennzeichnet, daß** die Anschläge (24) Köpfe von Schrauben (7) sind, die axial in den Träger (5) eingeschraubt sind.

2. Dichtanordnung nach Anspruch 1, **dadurch gekennzeichnet, daß** die Schrauben (7) die Radiallippendichtung (8) am Träger (5) festhalten.

3. Dichtanordnung nach Anspruch 1 oder 2, **dadurch gekennzeichnet, daß** die Schrauben (7) eine die Radiallippendichtung (8) abstützende Stützringscheibe (9) am Träger festhalten.

4. Dichtanordnung nach einem der Ansprüche 1 bis 3, **dadurch gekennzeichnet, daß** die Anschläge (24) Kreisform haben und in kreisförmige Vertiefungen (23) ragen.

5. Dichtanordnung nach Anspruch 4, **dadurch gekennzeichnet, daß** der Durchmesser der Vertiefungen (23) etwa das 2,5- bis 3-fache des Durchmessers der Anschläge (24) beträgt.

6. Dichtanordnung nach einem der Ansprüche 1 bis 5, **dadurch gekennzeichnet, daß** die zweite Ringnut-Seitenwand (19, 21) durch eine die Vertiefungen (23) als Löcher aufweisende Verdrehsicherungsringscheibe (21) gebildet ist, die am Ringnutengrund (22) zentriert und durch Axialschrauben (20) und eine Abdeckringscheibe (19) am zweiten Bauteil (3) befestigt ist.

7. Dichtanordnung nach einem der Ansprüche 1 bis 6, **dadurch gekennzeichnet, daß** die Radiallippe (10) der Radiallippendichtung (8) durch eine Feder (11) in Richtung auf die Umfangsfläche (2) belastet ist.

8. Dichtanordnung nach Anspruch 7, **dadurch gekennzeichnet, daß** die Feder (11) eine ringförmige, im Querschnitt U-förmige Blattfeder ist.

9. Verwendung der Dichtanordnung nach einem der Ansprüche 1 bis 8, **dadurch gekennzeichnet, daß** das eine Bauteil (1) die drehfest gehaltene Achse und das andere Bauteil (3) den darauf hydraulisch abgestützten Mantel einer Durchbiegungseinstellwalze umfaßt.

## Claims

1. Seal arrangement for use between two components (1, 3) that rotate relative to each other, of which the first (1) has a cylindrical circumferential surface (2) on the inner or outer circumference and the second has an annular groove (4) that is open towards the circumferential surface (2), containing the second component (3) with the annular groove (4), and an annular carrier (5) which can be displaced in the annular groove, can be guided on the circumferential surface by means of a centring web (6) and which bears a radial lip seal (8) whose lip (10) can be laid in a resilient manner on the circumferential surface (2), and an axial seal (12) which bears on a first annular groove side wall (13), also having an anti-rotation safeguard (25) for the carrier (5), which permits the carrier (5) a limited freedom of movement in all the directions of the radial plane, having stops (24) which project laterally from the carrier (5), and having a second annular groove side wall (19, 21), in which there are provided depressions (23) with a larger cross-sectional area than the stops (24), into which the stops project, **characterized in that** the stops (24) are heads of screws (7) which are screwed axially into the carrier (5).

2. Seal arrangement according to Claim 1,
**characterized in that** the screws (7) hold the radial lip seal (8) firmly on the carrier (5).

3. Seal arrangement according to Claim 1 or 2, **characterized in that** the screws (7) hold a supporting annular disc (9) that supports the radial lip seal (8) firmly on the carrier.

4. Seal arrangement according to one of Claims 1 to 3, **characterized in that** the stops (24) have a circular shape and project into circular depressions (23).

5. Seal arrangement according to Claim 4, **characterized in that** the diameter of the depressions (23) is about 2.5 to 3 times the diameter of the stops (24).

6. Seal arrangement according to one of Claims 1 to 5, **characterized in that** the second annular groove side wall (19, 21) is formed by an anti-rotation safeguard annular disc (21) having the depressions (23) as holes, which is centred on the annular groove base (22) and is fastened to the second component (3) by axial screws (20) and a covering annular disc (19).

7. Seal arrangement according to one of Claims 1 to 6, **characterized in that** the radial lip (10) of the radial lip seal (8) is loaded in the direction of the circumferential surface (2) by a spring (11).

8. Seal arrangement according to Claim 7, **characterized in that** the spring (11) is an annular leaf spring of U-shaped cross section.

9. Use of the seal arrangement according to one of Claims 1 to 8, **characterized in that** one component (1) is the axle, fixed against rotation, and the other component (3) is the shell, supported hydraulically thereon, of a deflection controlled roll.

## Revendications

1. Agencement d'étanchéité destiné à être utilisé entre deux éléments en rotation l'un par rapport à l'autre (1, 3), dont le premier (1) présente, sur la périphérie interne ou externe, une surface périphérique cylindrique (2) et le deuxième présente une rainure annulaire (4) ouverte vers la surface périphérique (2), la surface périphérique (2) contenant le deuxième élément (3) avec la rainure annulaire (4), et avec un support de forme annulaire (5) déplaçable dans la rainure annulaire, lequel peut être guidé au moyen d'une nervure de centrage (6) sur la surface périphérique et porte un joint à lèvre radial (8), dont la lèvre (10) peut être appliquée élastiquement contre la surface périphérique (2), et un joint axial (12) qui s'applique contre une première paroi latérale (13) de la rainure annulaire, par ailleurs avec une fixation contre la rotation (25) pour le support (5), qui autorise pour le support (5) un jeu de mouvement limité dans toutes les directions du plan radial, avec des butées (24) qui font saillie latéralement hors du support (5), et avec une deuxième paroi latérale (19, 21) de la rainure annulaire, dans laquelle sont prévus des renfoncements (23) de plus grande surface en section transversale que les butées (24), dans lesquels pénètrent les butées, **caractérisé en ce que** les butées (24) sont des têtes de vis (7) qui sont vissées axialement dans le support (5).

2. Agencement d'étanchéité selon la revendication 1, **caractérisé en ce que** les vis (7) fixent le joint à lèvre radial (8) sur le support (5).

3. Agencement d'étanchéité selon la revendication 1 ou 2, **caractérisé en ce que** les vis (7) fixent une rondelle annulaire de support (9) supportant le joint à lèvre radial (8) sur le support.

4. Agencement d'étanchéité selon l'une quelconque des revendications 1 à 3, **caractérisé en ce que** les butées (24) ont une forme circulaire et pénètrent dans des renfoncements de forme circulaire (23).

5. Agencement d'étanchéité selon la revendication 4, **caractérisé en ce que** le diamètre des renfoncements (23) vaut environ 2,5 à 3 fois le diamètre des butées (24).

6. Agencement d'étanchéité selon l'une quelconque des revendications 1 à 5, **caractérisé en ce que** la deuxième paroi latérale (19, 21) de la rainure annulaire est formée par une rondelle annulaire de fixation contre la rotation (21) présentant les renfoncements (23) en tant que trous, qui est centrée sur la base de la rainure annulaire (22) et qui est fixée par des vis axiales (20) et une rondelle annulaire de recouvrement (19) sur le deuxième élément (3).

7. Agencement d'étanchéité selon l'une quelconque des revendications 1 à 6, **caractérisé en ce que** la lèvre radiale (10) du joint à lèvre radial (8) est sollicitée par un ressort (11) dans la direction de la surface périphérique (2).

8. Agencement d'étanchéité selon la revendication 7, **caractérisé en ce que** le ressort (11) est un ressort à lames de forme annulaire, en forme de U en section transversale.

9. Utilisation de l'agencement d'étanchéité selon l'une quelconque des revendications 1 à 8,
**caractérisé en ce que** l'un des éléments (1) comprend l'axe maintenu fixe en rotation et l'autre élément (3) comprend l'enveloppe d'un cylindre d'ajustement de la flexion supportée hydrauliquement sur celui-ci.
